# EUROPÄISCHE PATENTANMELDUNG

(11) **EP 0 799 567 A2**
(43) Veröffentlichungstag der Anmeldung: **08.10.1997**
(21) Anmeldenummer: 97105481.2
(22) Anmeldetag: 02.04.1997
(51) Int. Cl.: A01K 9/00

(54) **Verfahren und Einrichtung zum Versorgen von Haustieren mit einem flüssigen Nahrungsmittel**

(30) Priorität: 02.08.1996 DE 29613366 U; 02.04.1996 DE 29605928 U
(71) Anmelder: Förster, Martin, Dipl.-Ing., D-78234 Engen (DE)
(72) Erfinder: Förster, Martin, Dipl.-Ing., D-78234 Engen (DE)
(74) Vertreter: Weiss, Peter, Dr. rer.nat.

(57) **Zusammenfassung**

Bei einem Verfahren zur Versorgung von Haustieren mit einem flüssigen Nahrungsmittel, das aus einem Vorratsbehälter, insbesondere einem Mischbehälter (1) eines Tränkeautomaten, über eine Saugleitung (2) zu einer Saugstelle (4.1 - 4.4) gelangt, soll vor der Saugstelle (4.1 - 4.4) die Menge des entnommenen flüssigen Nahrungsmittels ermittelt werden.

## Beschreibung

Die Erfindung betrifft eine Verfahren zur Versorgung von Haustieren mit einem flüssigen Nahrungsmittel, das aus einem Vorratsbehälter, insbesondere einem Mischbehälter eines Tränkeautomaten, über eine Saugleitung zu einer Saugstelle gelangt, sowie eine Einrichtung hierfür.

Bei der heutigen Mast von Kälbern, Ferkeln, Lämmer od. dgl. werden in der Regel Tränkeautomaten verwendet, bei denen beispielsweise ein Milchpulver in Wasser eingemischt und einer Saugstelle zugeführt wird. Das Haustier kann an dieser Saugstelle das flüssige Nahrungsmittel entnehmen, wobei die Zugabe des Nahrungsmittels dosiert erfolgt. Meist befindet sich jedoch in einem Stall eine Mehrzahl von zu fütternden Haustieren, so dass auch eine Mehrzahl von Saugstellen angeordnet sein sollten, damit eine einigermassen gerechte Zuteilung des Nahrungsmittels erfolgt. Bei den bekannten Tränkeautomaten geschieht jedoch das Zuteilen nur durch das Anrühren des flüssigen Nahrungsmittels. Wird beispielsweise ein halber Liter angerührt, so kann das entsprechende Kalb im Maximum diesen halben Liter saufen.

Auch heute gibt es bereits Tränkeautomaten, die mehr als eine Saugstelle mit Nahrungsmittel versorgen. Auch bei diesen Tränkeautomaten wird lediglich eine bestimmte Menge an flüssigem Nahrungsmittel angerührt. Wird an einer Saugstelle gesaugt, so ist die andere Saugstelle abgesperrt, so dass dort ein trinkwilliges Kalb nichts entnehmen kann. Dies ist unerwünscht.

Ferner ist aus dem Stand der Technik bekannt, dass Anmischbehälter gleichzeitig als Messbehälter zu Ermittlung der Verzehrmenge verwendet werden. Dabei werden zwei unterschiedliche Ausführungsmöglichkeiten unterschieden.

Einerseits werden Tränkeautomaten mit mehreren Anmischbehältern verwendet, welche gleichzeitig als Messbehälter dienen. Ahdererseits sind Tränkeautomaten mit Anrührbehälter bekannt, bei welchen die Tränke bzw. das Nahrungsmittel durch Gefälle oder durch Pumpen in mehrere einzelne Messbehälter befördert wird. Diesen Messbehälter ist dann jeweils eine Saugstelle zugeordnet. Nachteilig daran ist, dass derartige Tränkeautomaten und insbesondere deren offene Messeinrichtungen äusserst aufwendig zu reinigen sind, da dies auf manuelle Weise geschieht. Ferner sind offene Messeinrichtungen aus Hygienegründen nicht besonders geignet, da Narungsmittel schneller verdirbt. Zudem sind derartige Tränkeautomaten sehr kostenintensiv herzustellen und zu warten.

Aus dem Stand der Technik sind Mengenregler und Mengenmesseinrichtungen bekannt, welche den Durchfluss und Flussgeschwindigkeit an Nahrungsmittel messen und regeln. Diese sind äusserst teuer und kompliziert aufgebaut. Da das zu messende Medium bzw. das Nahrungsmittel aus verschiedenen Lebensmlttelkomonenten, wie bspw. Wasser, Milchpulver, Kraftfutter ect. und quellenden Komponenten besteht, deren Zusammensetzungen sich ständig ändern, weist das Nahrunsmittel unterschiedlichste Eigenschaften auf. Ein exaktes Strömungsverhalten bspw. beim Pumpen und beim Meessen zu ermitteln und zu bestimmen ist ohne deratig komplexe und teure Mengenmesseinrichtungen bisher nicht möglich.

Der vorliegenden Erfindung liegt die Aufgabe zugrunde, eine Einrichtung der o.g. Art zu schaffen, bei der auf einfache und exakte Weise ermittelt werden kann, welche Menge an flüssigem Nahrungsmittel ein Haustier zu sich genommen hat. Ferner sollen die o.g. Nachteile beseitigt werden.

Ferner soll das Ansaugen von Nahrungsmittel an der Saugstelle erleichtert werden, wenn junge Kälber an das Ansaugen angelernt werden müssen. Zudem sollen Herstellungskosten, Wartungs- und insbesondere Reinigungsaufwand reduziert werden.

Zur Lösung dieser Aufgabe führt, dass vor der Saugstelle die Menge des entnommenen flüssigen Nahrungsmittels ermittelt wird.

In der heutigen Kälberhaltung sind die mit Nahrungsmittel zu versorgenden Haustiere in der Regel mit einem Identifizierelement ausgerüstet, beispielsweise mit einem Transponder. Sobald ein bestimmtes Haustier an eine Saugstelle geht, wird es identifiziert. Mit einem Mengenmesselement kann nun exakt bestimmt werden, welches Haustier wieviel an flüssigem Nahrungsmittel in welcher Zeit zu sich genommen hat. Hierdurch ist es möglich, den Mastvorgang genau zu kontrollieren. Beispielsweise ist es auch möglich, den Gesundheitszustand eines Kalbes zu kontrollieren, wenn es über einen längeren Zeitraum hinweg nicht zur Saugstelle gekommen ist.

Eine Mengenmessung kann zum einen durch separate Mengenmesselemente erfolgen, die handelsüblich sind. Bevorzugt erfolgt sie allerdings durch ein bereits in der Einrichtung vorhandenes Bauelement. Beispielsweise ist dies ein Ventil, bevorzugt ein Magnetventil. Die Mengenmessung erfolgt durch die Messung der Öffnungszeit des Ventils.

Sofern eine Förderpumpe vorgesehen ist, kann auch diese zur Mengenmessung verwendet werden. Beispielsweise geschieht dies über die Messung der Laufzeit der Pumpe oder deren Umdrehungen.

Damit aber ein ordnungsgemässes Erfassen der gesoffenen Menge möglich ist, müssen verschiedene Faktoren berücksichtigt werden. Zum einen sind dies Druckschwankungen in der Saugleitung. Diese können beispielsweise durch einen gleichbleibenden Vordruck auf die Saugleitung oder durch Druckregler ausgeglichen werden. Möglich ist auch die Einschaltung von Mengenregler in die Saugleitung, die unabhängig von einem Vordruck nur eine bestimmte Menge durchlassen. Der Druck muss vor allem dann geregelt werden, wenn über eine Leitung eine Vielzahl von Saugstellen versorgt wird, an denen mehrere Kälber saufen können.

Ferner ist es wichtig, das Saugverhalten der einzelnen Tiere individuell zu ermitteln. Kälber haben unterschiedliche Trinkverhalten, insbesondere saugen sie unterschiedlich stark an, so dass die Öffnungszeit allein kein genaues Mass für die getrunkene Menge ist. Auch gibt es Kälber die kurze und sehr starke Saugzüge machen, während andere kaum ziehen, für einen Zug aber sehr lange brauchen.

Damit jedes Haustier nun die bestimmte und vorgesehene Mengen an Nahrungsmittel aufnimmt, wird zur Bestimmung der tatsächlich gesoffenen Menge ein Faktor als Korrekturfaktor ermittelt, welcher eine Aussage über die exakt gesoffene Menge jedes Kalbes in einer bestimmten Zeit ermöglicht. Somit wird jedem Kalb ein individueller Faktor zugeordnet, um danach bestimmte Öffnungszeiten des Mengenmesselementes zu korrigieren, damit eine bestimmte Menge, welche von dem Kalb getrunken wird, genau bestimmbar ist. Dieser Faktor wird in eine Steuereinheit übertragen und diese errechnet die exakte Menge an Nahrungsmittel, welche an das Kalb gefüttert wird.

Dieser Faktor zum Korrigieren der gesoffenen Menge wird jederzeit neu bzw. automatisch ermittelt und permanent korrigiert, wenn das Kalb wächst und sich sein Ansaug- bzw. Trinkverhalten ändert. Im wesentlichen wird der Faktor dann automatisch ermittelt, wenn das Kalb alleine an der Saugstelle säuft. Hierzu wird exakt ermittelt, wieviel Zeit ein Kalb braucht, um eine bestimmte, vorgegebene Menge an Nahrungsmittel zu saufen. Die Differenzmenge, gemessen am Durchschnittsverbrauch an Nahrungsmittel, pro Zeit bilden den Faktor für jedes Kalb individuell. Säuft ein Kalb langsamer als andere, so wird dann das Ansaugventil beim Saufen länger geöffnet und dem Kalb damit länger Nahrungsmittel zugeführt. Aus dem Unterschied der Sauggeschwindigkeit des Einzeltiers und der Sauggeschwindigkeit des Gesamtdurchschnitts aller Tiere wird ein Faktor gebildet, aus welchem Zu-und Abschläge für die tierindividuelle Sauggeschwindigkeit errechnet wird.

Eine Korrektur des Faktors kann auch manuell vorgenommen werden. Dazu ist nur erforderlich, dass eine bestimmte Menge, bspw. einige Liter oder eine Ration, dem Kalb zum Saufen gegeben und die Zeit bis zum Entleeren des Behälters ermittelt wird.

Der Faktor kann im übrigen relativ oder absolut zur Bestimmung der Menge des Nahrungsmittels genommen werden.

Ferner kann auch ein automatisches Kalibrieren der Messelemente über bekannte Teilmengen erfolgen. Bei Pumpen kann dies über eine vorbestimmte Fördermenge erfolgen, da bekannt ist, welche Menge die Pumpe bei welchen Umdrehungen fördert. Diese Fördermenge ist unabhängig davon, welches Kalb gerade säuft, so dass die Anzahl der Umdrehungen auf das jeweilige Kalb eingestellt werden muss. Dabei ist zu berücksichtigen, dass auch Veränderungen der Messeinheit im laufenden Betrieb und auch Änderungen beispielsweise der Viskosität der Nahrungsmittels ausgeglichen werden müssen.

Eine Einrichtung zur Durchführung des erfindungsgemässen Verfahrens sieht zumindest vor, dass in die Saugleitung ein Mengenmesselement eingeschaltet ist. Wie dies ausgestaltet ist, wurde oben beschrieben.

Desweiteren kann der Saugstelle ein Drucksensor vorgeschaltet sein. Bevorzugt wird er kurz vor der Saugstelle angeordnet. Der Abstand zur Saugstelle ist so bemessen, dass der Sensor die Nahrungsmittelzufuhr kurz vor der Saugstelle durch den Flüssigkeitsdruck abschaltet. Durch Saugen am Nuckel wird die Flüssigkeit angehoben und der Druckschalter schaltet die Förderung von Nahrungsmittel wieder ein. Die verwendeten Magnetventile bzw. Pumpen werden ggfs. über Druck- bzw. Unterdrucksensoren in Betrieb gesetzt.

Wird ein Unterdrucksensor gewählt, so schaltet dieser die Nahrungsmittelzufuhr direkt durch den erzeugten Unterdruck beim Saufen ein.

In einem anderen Ausführungsbeispiel der Erfindung soll zwischen die Saugstelle und den Tränkeautomaten eine Förderpumpe eingeschaltet sein, wie dies in der DE-OS 36 13 887 beschrieben ist. Diese Förderpumpe hat den Sinn, das Tränken von insbesondere Jungtieren zu unterstützen. Zusammen mit dem erfindungsgemässen Mengenmesselement erfolgt eine ideale, gezielte Ernährung der Haustiere, insbesondere der Jungtiere.

Das Mengenmesselement kann separat zwischen Förderpumpe und Saugstelle angeordnet sein, es ist jedoch auch möglich, das Mengenmesselement direkt der Förderpumpe zuzuordnen, so dass allein schon aus der Tätigkeit der Förderpumpe selbst auf die Menge des geförderten flüssigen Nahrungsmittels geschlossen wird. Letztere Fall ist technisch weniger aufwendig.

Vor allem ist es nun möglich, eine Mehrzahl von Saugstellen über einen Tränkeautomaten gleichzeitig mit flüssigem Nahrungsmittel zu versorgen. Beispielsweise können an einer bis etwa sechs Saugstellen mehrere Jungtiere gleichzeitig flüssiges Nahrungsmittel entnehmen, ohne sich gegenseitig zu behindern.

Trotz dem gleichzeitigen Füttern von mehreren Tieren erfolgt eine genaue Aufzeichnung der entnommenen Menge je Tier, wobei die jeweiligen Werte der einzelnen Mengenmesselemente getrennt je Saugstelle, aber bezogen auf ein spezielles identifiziertes Tier abgespeichert werden.

Wie in der DE-OS 36 13 887 beschrieben, erfolgt die Steuerung der Förderpumpe über einen in der Saugleitung zur Saugstelle herrschenden Unterdruck. D.h., sobald beispielsweise ein Kalb zu saugen beginnt, wird die Förderpumpe eingeschaltet und unterstützt den Strom des flüssigen Nahrungsmittels. Bevorzugt soll im vorliegenden Ausführungsbeispiel noch ein zusätzlicher Schalter in diese Leitung zwischen Unterdrucksensor und Förderpumpe eingeschaltet sein, der es ermöglicht, die Förderpumpe so einzuschalten, dass eine geringe Menge an Nahrungsmittel aus dem Nuckel austritt. Hierdurch wird das Jungtier noch besser zur Nahrungsentnahme angereizt. Ähnlich ist dies auch beim Euter einer Kuh, wenn ein Kalb beispielsweise mit der Schnauze gegen eine Zitze stösst, da auch dann oft eine geringe Menge an Milch aus der Zitze herausspritzt und das Kalb zum Saugen anregt.

In einem weiteren Ausführungsbeispiel der vorliegenden Erfindung ist zwischen Mischbehälter und Saugstelle bzw. Nuckel eine Förderpumpe eingesetzt. Diese Förderpumpe wird bevorzugt vom Stall aus mittels eines Betätigungsschalters, der nahe dem Nuckel angeordnet ist, in Betrieb gesetzt. Dadurch wird das Nahrungsmittel aus dem Mischbehälter über die Saugleitung zur Saugstelle befördert und tritt heraus. Dies dient im wesentlichen dazu, junge Kälber an das Saugen bzw. Saufen an derartigen Saugstellen zu gewöhnen. Das junge Kalb bekommt sofort, wenn es an der Saugstelle saugt, das Nahrungsmittel. Es lernt sehr schnell alleine damit umzugehen.

Ist das junge Kalb dann später an den Nuckel bzw. die Saugstelle gewöhnt, so kann es, ohne dass die Pumpe betätigt wird, von alleine das Nahrungsmittel aus dem Mischbehälter ansaugen. Dies wird dadurch gewährleistet, dass die Förderpumpe im Stillstand einen Durchfluss ermöglicht. Dabei ist diese Förderpumpe so ausgelegt, dass das Nahrungsmittel in etwa widerstandslos die Förderpumpe durchströmen kann.

Durch Verändern des statischen Druckes durch Erhöhen oder Erniedrigen des Mischbehälters im Verhältnis zur Saugstelle kann zusätzlich ein Fliessen des Nahrungsmittels zur Saugstelle hin beeinflusst werden, wie dies später noch im einzelnen beschrieben wird.

Auch bei dem Ausführungsbeispiel mit der Förderpumpe können zwischen Saugstelle und Förderpumpe, wenn dies gewünscht ist, Drucksensoren und Mengenmesselemente eingeschaltet sein, um die Pumpe in Betrieb zu setzen, wie dies oben ausführlich beschrieben ist.

Ein weiterer Vorteil einer derartigen Anordnung ist, dass mittels der Förderpumpe die Leitungen, die Förderpumpe selbst und die Saugstelle gereinigt werden können, wobei dann in den Mischbehälter beispielsweise Wasser oder Reinigungsmittel eingefüllt ist. Dazu kann bevorzugt die Förderpumpe auch vom Behälter aus angesteuert werden.

In einem weiteren Ausführungsbeispiel der vorliegenden Erfindung ist dem Mischbehälter eine Steuereinheit zugeordnet, welche bevorzugt mehrere an einen Mischbehälter angeschlossene Mengenmesseinrichtungen steuert. Zwei Mengenmesseinrichtungen, sind mit einer Hauptleitung mittels eines Verteilers verbunden. Die einzelnen Mengenmesseinrichtungen sind über Zuleitungen mit einzelnen Saugstellen bzw. Nuckel verbunden.

Bei mehreren Leitungen zu Saugstellen kann in jede Leitung eine Pumpe eingeschaltet sein, es ist jedoch auch möglich, zwei oder mehr Saugleitungen über eine Pumpe zu versorgen. Auf diese folgt dann ein Abzweigventil, welches auf die eine oder andere Saugleitung umgeschaltet wird. Dieses Umschalten beider Ventile geschieht in kurzen Abständen alternierend im Wechsel. Diese Unterbrechung hat auf das Saufverhalten der Kälbern keinen Einfluss. Da nur jeweils ein Ventil geöffnet ist, bleibt der Gesamtquerschnitt konstant, was einen konstanten Druck und ein gleichmässiges Zuführen von Nahrungsmittel zu Folge hat.

Bevorzugt soll in diesem Fall in einer oder in beiden Saugleitungen ein Puffer, insbesondere Vorratsbehälter, vorgesehen sein, so dass ein Kalb auch nach Abschalten von seiner Leitung noch die ihm ausgegebene Restmenge absaugen kann. Dem Puffer kann zum Steuern der Ventile auch ein Sensor zugeordnet sein.

Ein derariger Puffer besteht im wesentlichen aus einem geschlossenen Behälter, dessen Volumen veränderbar ist. Dabei kann der Behälter bspw. mit einer Membran versehen sein, welche elastisch ausgebildet ist. Aber auch ein Kolben kann anstelle der Membran die in dem Behälter verschiebbar angeordnet sein. Der Puffer hat die Aufgabe eine bestimmte Restmenge an Nahrungsmittel zu speichern. Der Puffer wird mit Nahrungsmittel gefüllt. Anschliessend wird die Zuleitung von dessen Ventil abgesperrt und kann eine weiterere Saugstelle mit einem weiteren Puffer bedienen. Währenddessen kann das Kalb die Menge an flüssigem und im Puffer gespeicherten Nahrungsmittel absaugen. Ist der Behälter entleert, so wird über einen entsprechenden Schalter die Zuleitung zum Puffer, auf ein Signal des Schalters hin, geöffnet und Nahrungsmittel kann erneut in den Puffer einströmen. Dieser Vorgang wiederholt sich.

Auf eine Förderpumpe kann verzichtet werden, wenn das flüssige Nahrungsmittel in der Saugleitung zur Saugstelle unter einem statischen Druck steht. Dabei dürfte es sich als ratsam erweisen, der Saugstelle ein Ventil vorzuschalten, damit nicht flüssiges Nahrungsmittel unbeabsichtigt aus der Saugstelle austritt. Bevorzugt wird dieses Ventil von einem Sensor gesteuert, welcher in dem Augenblick das Ventil öffnet, wenn ein Haustier zu saugen beginnt. Der Einfachheit halber kann dieser Sensor bspw. ein Drucksensor sein, der den beim Saugen entstehenden Unterdruck ermittelt und hierdurch das Ventil öffnet. Auch bei dem Ventil sind mehrere Möglichkeiten denkbar.

Der statische Druck des flüssigen Nahrungsmittels kann nicht nur bei der Versorgung von einer Saugstelle, sondern auch bei der Zufuhr von flüssigem Nahrungsmittel zu mehreren Saugstellen ausgenutzt werden.

Zur Ermittlung der entnommenen Menge an flüssigem Nahrungsmittel kann dem Ventil ein Mengenmesselement vor- oder nachgeschaltet sein.

Für die Erzeugung eines statischen Druckes für das flüssige Nahrungsmittel in der Saugleitung sind zwei Möglichkeiten angedacht. Die eine Möglichkeit ist, den gesamten Tränkeautomat so hoch zu stellen, dass er über der Saugstelle angeordnet ist. Damit befindet sich auch der Mischbehälter, in dem das flüssige Nahrungsmittel angerührt wird, über der Saugstelle, so dass zwischen dem Mischbehälter und der Saugstelle ein Gefälle vorhanden ist.

Die zweite Möglichkeit sieht die Anordnung eines Vorratsbehälters zwischen Mischbehälter und Saugstelle vor, wobei der Vorratsbehälter höher gehängt ist als die Saugstelle. Das bedeutet, dass angemischtes Nahrungsmittel zuerst über eine Pumpe von dem Mischbehälter in den Vorratsbehälter transportiert werden muss. Aus dem Vorratsbehälter fliesst dann das Nahrungsmittel nach Öffnen eines entsprechenden Ventils unter dem statischen Druck zur Saugstelle.

Allerdings wäre es auch denkbar, dass das angemischte Nahrungsmittel mittels einer Pumpe durch eine Ringleitung, an welcher eine Mehrzahl von Saugstellen angebracht sind, ständig bzw. bei Bedarf zirkulierend von einem Behälter durch diese Ringleitung und wieder zurück zu dem Behälter transportiert wird. Auch so wäre gewährleistet, dass in diese Ringleitung durch den Einsatz der Pumpe ein statischer Druck aufgebaut ist, welcher das Saugen des Tieres erleichtert.

Somit kann mittels nur einem Mischbehälters und einfachen Bauteilen, wie Magnetventilen, eine Mehrzahl von Saugstellen gleichzeitig versorgt werden, wobei jedem einzelnen Kalb bzw. jeder Saugstelle eine ganz bestimmte regelbare Menge an Nahrungsmittel zugeführt wird.

In einem weiteren Ausführungsbeispiel der vorliegenden Erfindung wird an eine Pumpe, insbesondere Kreisel- oder Schneckenpumpe, ein Verteiler nachgeschaltet. Der Verteiler kann eine beliebige Anzahl von unterschiedlichen Zuleitungen aufweisen, welche an eine weitere Verzweigung und/oder an ein Umschaltventil führen. Die eine Leitung der Verzweigung führt direkt zur Saugstelle, die andere Leitung führt auf eine gemeinsame Rückleitung, welche in den Mischbehälter einmündet.

Direkt an der Verzweigung sind zwei Magnetventile angeordnet, wobei eines der beiden Magnetventile in die gemeinsame Rückleitung zum Behälter führt. Das andere Magnetventil ist mit der Saugstelle verbunden.

Der Vorteil, welcher sich hier durch diese Anordnung ergibt ist, dass immer eines der beiden Ventile im Wechsel geöffnet ist. Somit strömt permanent Nahrungsmittel in einem Kreislauf von dem Mischbehälter zur Pumpe durch den Verteiler zu den beiden Magnetventilen und dort zur Rückleitung oder wenn ein Kalb säuft, direkt zur Saugstelle. Somit stellt sich an jeder einzelnen Saugstelle ein gleicher Druck je Saugstelle ein, unabhängig von der Anzahl saugender Tiere. Ferner wird jeder Saugstelle bei konstantem Druck eine exakt gleiche Menge an Nahrungsmittel zugeführt.

Wichtig bei der vorliegenden Erfindung ist auch, dass alle verwendeten Pumpen vor dem Einschalten der Magnetventile in Betrieb gesetzt werden. Dies geschieht bspw. mittels der Unterdrucksensoren. Damit werden Ungenauigkeiten beim Bestimmen und Messen von Mengen verhindert, da während des Einschaltvorganges die Leistung der Pumpe unterschiedlich ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische Darstellung einer erfindungsgemässen Einrichtung zum Versorgen von Haustieren mit einem flüssigen Nahrungsmittel;
Figur 2 eine schematische Darstellungen eines weiteren Ausführungsbeispiels einer erfindungsgemässen Einrichtungen zum Versorgen von Haustieren mit einem flüssigen Nahrungsmittel;

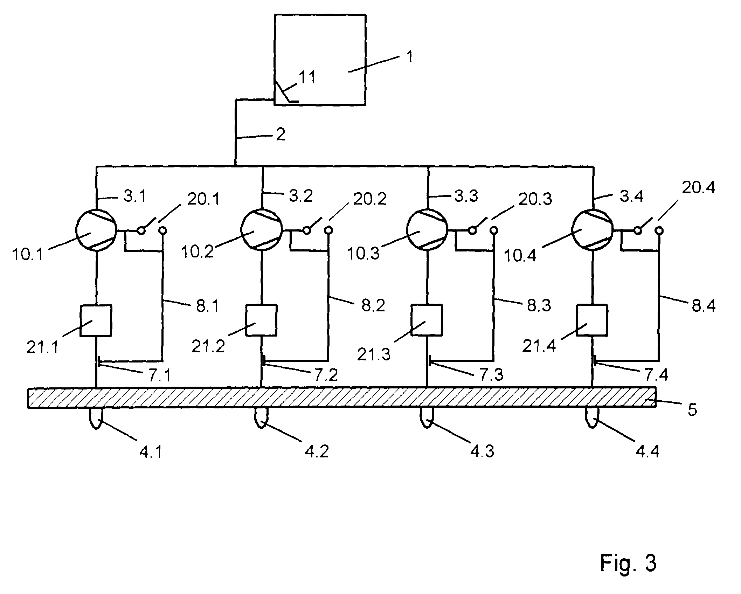

Figur 3 eine schematische bzw. blockschaltbildliche Darstellung einer erfindungsgemässen Einrichtung zum Versorgen von Haustieren mit einem flüssigen Nahrungsmittel;
Figur 4 eine schematische bzw. blockschaltbildliche Darstellung eines weiteren Ausführungsbeispiels einer Einrichtung zum Versorgen von Haustieren mit flüssigem Nahrungsmittel;
Figur 5 eine schematische bzw. blockschaltbildliche Darstellung einer möglichen Anordnung zum Steuern einer Einrichtung zum Versorgen von Haustieren entsprechend Figur 1;
Figur 6 eine weitere schematische bzw. blockschaltbildliche Darstellung eines weiteren Ausführungsbeispiels einer Einrichtung gemäss Figur 3;
Figur 7 eine schematische bzw. blockschaltbildliche Darstellung eines weiteren Ausführungsbeispiels, einer Einrichtung zum Versorgen von Haustieren mit flüssigem Nahrungsmittel;
Figur 8 einen schematisch dargestellten Querschnitt eines Puffers zur Speicherung von Nahrungsmittel;
Figur 9 einen schematisch dargestellten Querschnitt eines weiteren Puffers gemäss Figur 8.

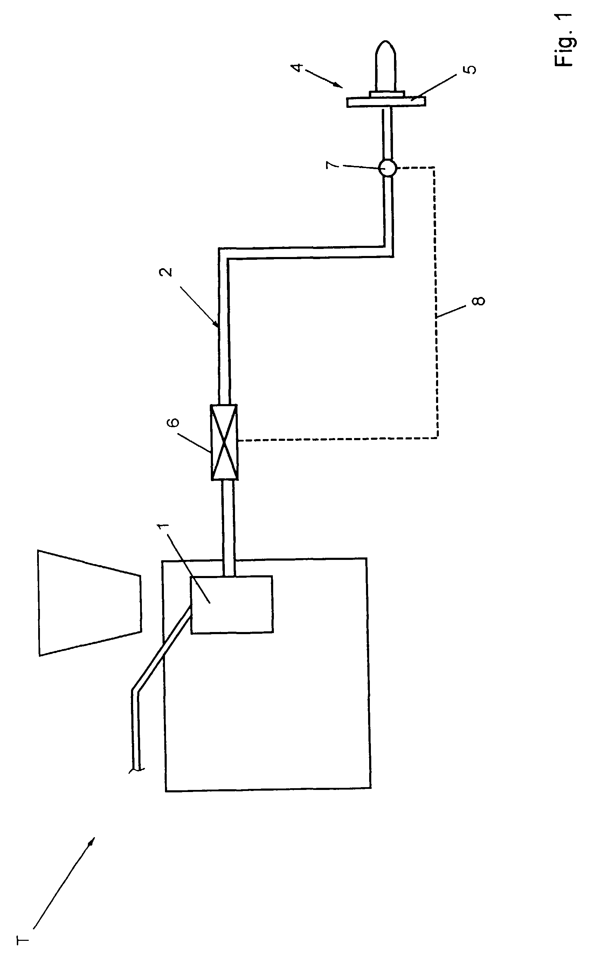

Gemäss Figur 1 wird flüssiges Nahrungsmittel in einen Misch-behälter 1 angerührt, wobei dieser Mischbehälter 1 Bestandteil eines allgemein bekannten Tränkeautomaten T sein kann, der hier nicht näher beschrieben ist. Nur bspw. wird hier auf die DE-OS 34 01 168 verwiesen.

Das angerührte flüssige Nahrungsmittel gelangt von dem Mischbehälter 1 in eine Saugleitung 2, die zu einem Nuckel einer Saugstelle 4 für das Haustier führt. Im vorliegenden Fall ist der Nuckel 3 an einer Halterung 5 angeordnet, wobei diese Halterung 5 auch Teil einer Stallwand sein kann.

In die Saugleitung zwischen dem Mischbehälter 1 und der Saugstelle 4 ist ein Ventil 6 eingeschaltet. Dieses Ventil 6 verhindert zusammen mit einem Drucksensor 7 ein Austreten der Flüssigkeit aus der Saugstelle 4, sofern kein Haustier mit Nahrungsmittel versorgt wird.

Will ein Haustier Nahrungsmittel entnehmen und beginnt an der Saugstelle 4 zu saugen, so wird dies durch den Drucksensor 7 erfasst, der mit einer nur gestrichelt angedeuteten Leitung 8 mit dem Ventil 6 verbunden ist. Beispielsweise kann es sich bei dem Drucksensor 7 auch um einen Drucksensor (Membransensor) handeln, der aufgrund des Saugens einen Schaltimpuls an das Ventil 6 abgibt. Das Ventil 6 öffnet zumindest solange wie das Haustier saugt.

Erkennbar ist, dass der Mischbehälter 1 und im vorliegenden Ausführungsbeispiel der gesamte Tränkeautomat T höher steht als die Saugstelle 4. Dies bedeutet, dass das Nahrungsmittel in der Saugleitung 2 unter einem statischen Druck steht, so dass es ungehindert vom Mischbehälter 1 zur Saugstelle 3 fliesst, sofern das Ventil 6 geöffnet ist. Hierdurch wird die Versorgung des Haustieres mit flüssigem Nahrungsmittel erleichtert.

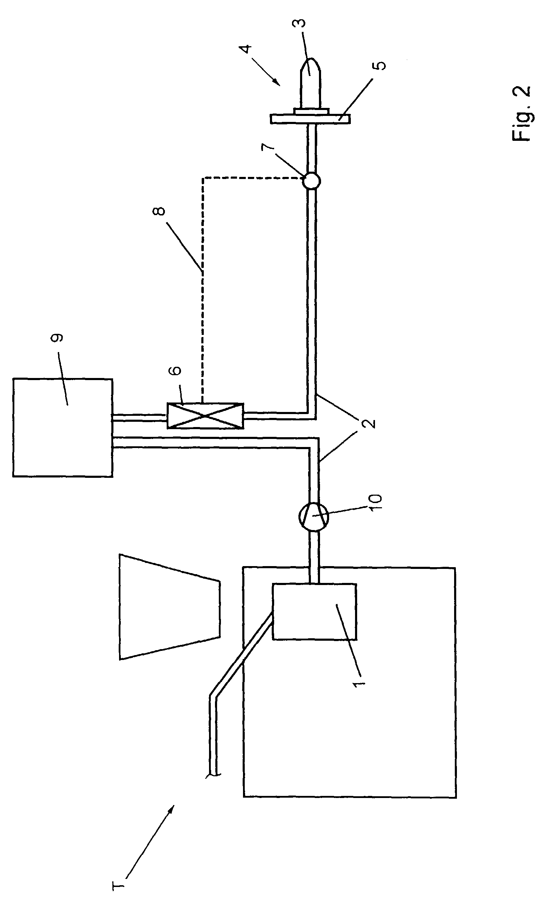

Eine andere Möglichkeit der Zufuhr von flüssigem Nahrungsmittel unter statischem Druck ist in Fig. 2 angedeutet. Hierbei ist in der Saugleitung 2 zwischen dem Mischbehälter 1 und dem Ventil 6 ein separater Vorratsbehälter 9 und eine Pumpe 10 vorgesehen. Der Vorratsbehälter 9 hängt höher als der Tränkeautomat T und insbesondere als die Saugstelle 4, so dass die Flüssigkeit zwischen Vorratsbehälter 9 und Saugstelle 4 unter dem oben erwähnten statischen Druck steht.

Ein Füllen des Vorratsbehälters 9 geschieht über die Pumpe 10, welche angemischte Nahrungsflüssigkeit aus dem Mischbehälter 1 in den Vorratsbehälter 9 transportiert. Aus dem Vorratsbehälter 9 gelangt das Nahrungsmittel nach dem Öffnen des Ventils 6 in Folge des Schaltimpulses des Drucksensors 7 zur Saugstelle 4. Vom vorliegenden Erfindungsgedanken sei auch umfasst, dass mehrere Saugstellen (4) an einen Vorratsbehälter (9) und/oder an den Mischbehälter (1) in oben beschriebener Weise angeschlossen sein können.

In einem weiteren Ausführungsbeispiel der Erfindung gelangt das angerührte flüssige Nahrungsmittel von dem Mischbehälter 1 in eine Hauptleitung 2, die eine Mehrzahl von Zweigleitungen 3.1 - 3.4 versorgt. Jede Zweigleitung 3.1 - 3.4 führt zu einem Nuckel 4.1 - 4.4, der eine Saugstelle für das Haustier bildet. Im vorliegenden Fall sind alle Nuckel 4.1 - 4.4 an einer gemeinsamen Halterung 5 angeordnet.

In jeder Zweigleitung 3.1 - 3.4 ist eine Förderpumpe 10.1 - 10.4 vorgesehen, über die das flüssige Nahrungsmittel zum Nuckel 4.1 - 4.4 gefördert werden kann. Aufgaben und Vorteile dieser Förderpumpe 10.1 - 10.4 sind in der DE-OS 36 13 887 beschrieben. Dort wird auch erwähnt, dass die Tätigkeit der Förderpumpe 10.1 - 10.4 über einen Drucksensor 7.1 - 7.4 gesteuert wird, welcher ermittelt, ob ein Über- und/oder Druck in der Zweigleitung 3.1 - 3.4 zwischen der Förderpumpe 10.1 - 10.4 und dem Nuckel 4.1 - 4.4 auftritt. Ein derartiger Druck tritt dann auf, wenn ein Haustier zu saugen beginnt, so dass dann die Förderpumpe 10.1 - 10.4 eingeschaltet wird und die Nahrungsaufnahme durch das Haustier unterstützt.

Erfindungsgemäss ist in eine Leitung 8.1 - 8.4 zwischen dem Drucksensor 7.1 - 7.4 und der Förderpumpe 10.1 - 10.4 ein Schalter 20.1 - 20.4 eingeschaltet, über den auch getrennt von dem Drucksensor 7.1 - 7.4 die Förderpumpe 10.1 - 10.4 in Gang gesetzt werden kann, so dass flüssiges Nahrungsmittel geringfügig aus dem Nuckel 4.1 - 4.4 zum Anreizen des zu fütternden Haustieres austreten kann.

Ferner ist erfindungsgemäss im vorliegenden Ausführungsbeispiel zwischen die Förderpumpe 10.1 - 10.4 und den Nuckel 4.1 - 4.4 ein Mengenmesselement 21.1 - 21.4 eingeschaltet, über welches exakt die Menge an flüssigem Nahrungsmittel ermittelt wird, die an der jeweiligen Saugstelle bzw. dem Nuckel 4.1 - 4.4 entnommen wird. Derartige Mengenmesselemente 21.1 - 21.4 für ein fliessendes Medium sind allgemein im Handel erhältlich, wobei alle diese Durchflussmessgeräte Anwendung finden können. Ferner ist es möglich, dass Mengenmesselement 21.1 - 21.4 separat zwischen der Förderpumpe 10.1 - 10.4 und dem Nuckel 4.1 - 4.4 anzuordnen. Günstiger dürfte es allerdings sein, das Mengenmesselement direkt der Förderpumpe 10.1 - 10.4 zuzuordnen bzw. eine Pumpe zu wählen, mit der eine direkte Messung der Fördermenge erfolgt.

Bevorzugt ist einem Auslauf zu der Hauptleitung 2 in dem Mischbehälter 1 ein Sieb 11 zugeordnet, welches auch in der Gebrauchsmusteranmeldung 296 03 702.8 beschrieben ist, auf die hier Bezug genommen wird. Dieses Sieb hat den Zweck, dass zum einen ungelöste Pulverklumpen zurückgehalten werden, zum anderen vermeidet das Gitter bzw. Sieb jedoch, dass Luftblasen, die beim Mischvorgang in dem Mischbehälter entstehen, in die Hauptleitung 2 gelangen. Durch diese Luftblasen würde die Mengenmessung in ihrer Genauigkeit wesentlich verschlechtert.

Auch ist vorgesehen, dass das Sieb 11 von einem Rührer in dem Mischbehälter 1 bzw. von an einem Rührer befestigten Borsten abgereinigt wird.

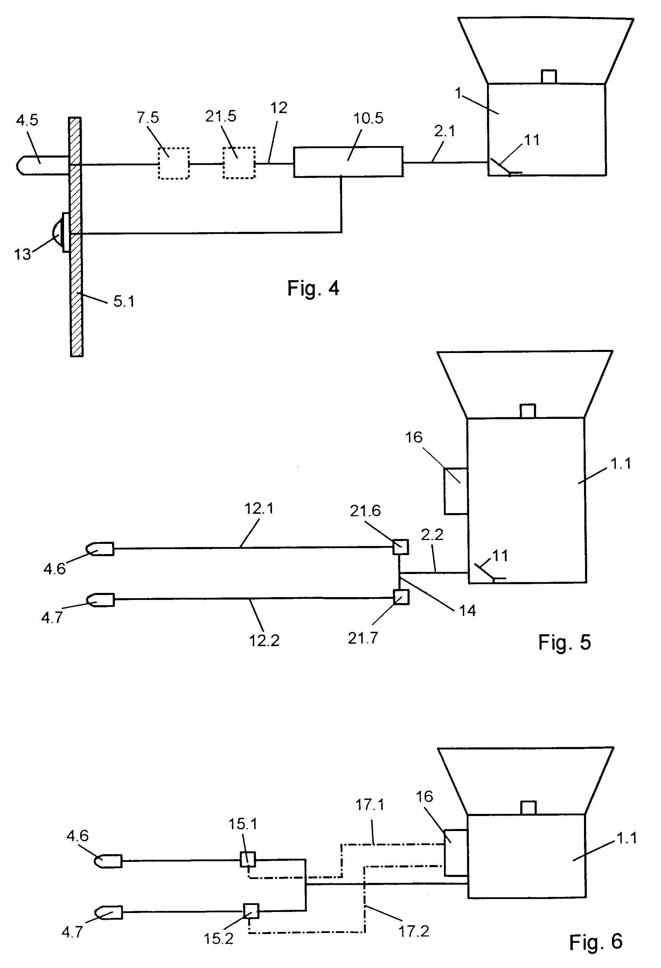

In einem weiteren Ausführungsbeispiel der vorliegenden Erfindung gemäss Figur 4 ist dem Mischbehälter 1 in einer Hauptleitung 2.1 eine Förderpumpe 10.5 nachgeschaltet, welche über eine Zuleitung 12 mit einem Nuckel 4.5 in Verbindung steht. Der Nuckel 4.5 ist an einer Halterung 5.1 festgelegt. Bevorzugt nahe dem Nuckel 4.5 befindet sich ein Schalter 13, über den die Förderpumpe 10.5 in Betrieb gesetzt werden kann. Durch Betätigen des Schalters 13 kann das Nahrungsmittel aus dem Mischbehälter 1 durch Inbetriebsetzen der Pumpe 10.5 zum Nuckel 4.5 befördert werden.

Der wesentliche Vorteil, der sich durch diese Anordnung ergibt, ist, dass unter Verwendung von Kreisel- oder Schneckenpumpen als Förderpumpen 10.5, welche beim Stillstand das Nahrungsmittel widerstandslos durch die Förderpumpe 10.5 durchfliessen lassen, das Kalb jederzeit an dem Nuckel 4.5 das Nahrungsmittel ansaugen kann.

Somit dient die Förderpumpe 10.5 in diesem Ausführungsbeispiel im wesentlichen nur dazu, das Nahrungsmittel aus dem Behälter 1 nach vorne zum Nuckel 4.5 zu befördern. Das Nahrungsmittel befindet sich somit auch ohne Ansaugen schon im Nuckel 4.5, und das Kalb kann sofort die Nahrung aufnehmen. Dies ist dann erwünscht, wenn das Kalb noch sehr klein ist und an das Nuckeln derartigen Vorrichtungen gewöhnt werden muss.

Im übrigen kann über die Pumpe 10.5, welche auch an dem Mischbehälter 1 angebracht sein kann, ein Reinigen der Hauptleitung 2.1, der Leitung 12 und des Nuckels 4.5 erfolgen. Hierzu wird Wasser und/oder Reinigungsmittel in den Mischbehälter 1 eingefüllt und durch die Leitungen 2.1 und 12 gepumpt.

Bei diesem Ausführungsbeispiel soll auch vorgesehen sein, dass ein Mengenmesselement 21.5 und/oder Drucksensor 7.5 zwischen Nuckel 4.5 und Förderpumpe 10.5 zwischengeschaltet ist/sind, um die Pumpe 10.5 einzuschalten und die Menge an Nahrungsmittel genau zu bestimmen. Diese können jedoch auch zwischen der Förderpumpe 10.5 und dem Mischbehälter 1 angeordnet werden.

Ist das Kalb an das Ansaugen mittels dem Nuckels 4.5 gewöhnt, so kann das Vorpumpen des Nahrungsmittels entfallen. Das Kalb kann dann das Nahrungsmittel direkt aus dem Behälter 1 ansaugen, wobei dieses widerstandlos durch die Förderpumpe 10.5 strömt. Eine Steuerung der Nahrungsmittelmenge kann dann durch das Mengenmesselement 21.5 erfolgen.

In einem weiteren Ausführungsbeispiel der vorliegenden Erfindung gemäss Figur 5 werden an einen Mischbehälter 1.1 über ein T-Stück 14 zumindest zwei separate Mengenmesseinrichtungen 21.6, 21.7 angeschlossen. Diese bestehen im wesentlichen aus einem Magnetschalter mit integriertem Druckventil. Der Magnetschalter kann über eine entsprechende Steuerung die jeweiligen Zuleitungen 12.1, 12.2 zu den Nuckel 4.6, 4.7 getrennt ansteuern. An jedem Nuckel 4.6, 4.7 kann ein Kalb saufen. Dabei sind den Nuckel 4.6 und 4.7 Erkennungseinrichtungen für Transponder zugeordnet, damit erkannt wird, welches Kalb an welchem Nuckel säuft.

Die Menge, welche von einem Kalb getrunken wird, lässt sich beispielsweise über die Öffnungszeit des Magnetventils bestimmen. Dies hat den Vorteil, dass komplizierte Mengenmesseinrichtungen, welche mit Durchflussmesser oder ähnlichen Elementen arbeiten, entfallen können. Es genügt hier ein einfaches Magnetventil. Der Drucksensor dient lediglich zum Inbetriebsetzen und Öffnen des Magnetventils, wenn das Kalb an einem der Nuckel 4.6, 4.7 saufen möchte. Derartige Magnetventile sind auch leicht zu steuern und zu reinigen.

Wenn beispielsweise mehrere Mengenmesseinrichtungen 21.1, 21.2 an einem einzelnen Mischbehälter 1.1 angeschlossen sind, kann die exakte Menge die jedes Kalb säuft, nicht bestimmt werden, da die Menge nur über die Öffnungszeit der Ventile bestimmt wird. Kälber zeigen aber beim Saufen unterschiedliche Saug- und Saufverhalten. Beispielsweise saugt ein Kalb stärker an als ein anderes. Somit kann in derselben Zeit ein Kalb mehr trinken als das andere.

Hier soll auch daran gedacht sein mehrere Zuleitungen 12.1, 12.2 zu den Saugstellen 4 direkt mit mehreren Mengenmesseinrichtungen 21.1, 21.2 an den Mischbehälter 1.1 anzuschliessen. Die Leitung 2.2 kann dann entfallen. Bevorzugt sind die Mengenmesseinrichtungen 21.1, 21.2 als Magnetventile ausgebildet, deren Öffnungszeit steuerbar ist.

Um diesem Verhalten Rechnung zu tragen, wird jedem Kalb ein bestimmter Faktor zugeordnet. Dieser Faktor ist in einer Steuereinheit 16 des Mischbehälters 1.1 gespeichert. Er kann für jedes Kalb individuell ermittelt und eingegeben werden.

Die Ermittlung dieses Faktors erfolgt automatisch, wenn das Kalb bspw. allein an der Saugstelle säuft. Einem Kalb wird eine bestimmte Menge an Nahrungsmittel über die Mengenmesseinrichtung zugeführt, wobei die Öffnungszeit gemessen wird, in welcher das Kalb diese Mengen an Nahrungsmitteln saufen kann. Somit bekommt jedes Kalb einen eigenen Faktor, welcher in die Steuerung der Öffnungszeiten der Mengenmesseinrichtungen 15.1, 15.2 für jedes Kalb individuell und automatisch einfliesst. Dieser Faktor wird nach jedem Saufen, nur wenn ein Kalb allein an der Einrichtung säuft, neu bestimmt und fliesst als Korrekturfaktor für die nächsten gemeinsamen Saugvorgänge mit anderen Kälbern ein. Über diesen Faktor lässt sich eine Korrektur der gesoffenen Menge vornehmen, wenn Kälber unterschiedlich viel Nahrungsmittel bei gleicher Öffnungszeit zu sich nehmen.

Im gezeigten Ausführungsbeispiel ist ein einfaches T-Stück 14 vorgesehen, um die Saugleitung 2.2 zu verzweigen. Hier ist auch denkbar, mehrere T-Stücke 14 an die Saugleitung 2.2 anzuschliessen, um mehrere Nuckel zu versorgen.

Wie in Figur 6 schematisch dargestellt, können die Mengenmesseinrichtungen 15.1, 15.2 auch über gestrichelt angedeuteten Signalleitungen 17.1, 17.2 direkt von einer Steuereinheit 16 am Mischbehälter 1.1 angesteuert werden.

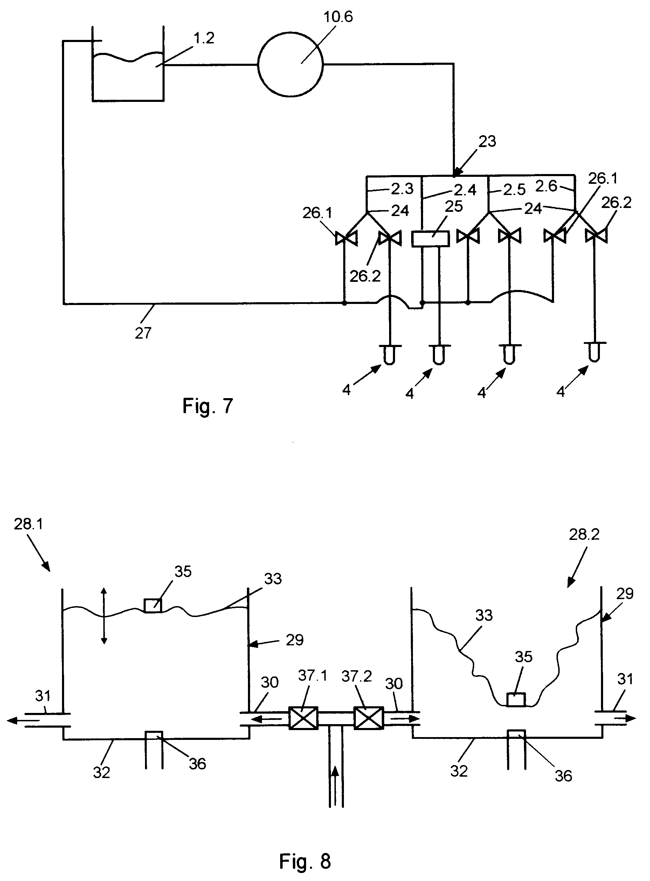

In einem weiteren Ausführungsbeispiel der vorliegenden Erfindung gemäss Figur 7 ist an einen Mischbehälter 1.2, über eine Verbindungsleitung 22 eine Pumpe 10.6 angeschlossen, welche zu einem Verteiler 23 führt. Von dort zweigen einzelne Saugleitungen 2.3 bis 2.6 ab, wobei an dessen Enden jeweils eine Verzweigung 24 oder ein Umschaltventil 25 sitzt.

An die Verzweigung 24 schliessen sich jeweils Magnetventile 26.1 und 26.2 an. Das Magnetventil 26.2 führt direkt zur Saugstelle 4. Das Magnetventil 26.1 hingegen führt zu einer gemeinsamen Rückleitung 27, welche mit dem Mischbehälter 1.2 verbunden ist. Ebenso ist das Umschaltventil 25 einerseits mit der Saugstelle 4 und andererseits auch mit der Rückleitung 27 verbunden. Der Vorteil, welcher sich hierdurch ergibt ist, dass der konstante Druck erhalten bleibt, welcher an allen Saugstellen 4 konstant ist, wobei unerheblich ist, wieviele Saugstellen bedient werden. Das flüssige Nahrungsmittel wird ständig entweder über die Rückleitung 27 in den Mischbehälter 1.2 transportiert oder wird, je nach Schaltung der Magnetventile 26.1, 26.2 über die Saugstelle 4 dem Kalb zugeführt.

Durch das ständige Transportieren des Nahrungsmittels in den Mischbehälter 1.2 findet ein Druckausgleich statt. Bevorzugt finden hier als Pumpen 10.6 Kreisel- bzw. Schneckenpumpen Anwendung. Im gesamten Leitungssystem herrscht konstanter Druck, so dass eine exakte Menge, welche von dem Kalb an den Saugstellen gesoffen wird, bestimmt werden kann. Die Magnetventile 26.1, 26.2 schalten optional. Wird das Magnetventil 26.2 durch das Saugen an der Saugstelle 4 geöffnet, so wird gleichzeitig das Magnetventil 26.1 geschlossen. Wird nicht mehr gesaugt, so wird das Magnetventil 26.2 geschlossen und das andere Magnetventil 26.2 ist geöffnet. Gleiche Funktion kann auch das Umschaltventil 25 übernehmen.

In einem weiteren Ausführungsbeispiel der vorliegenden Erfindung ist gemäss Figur 8 ein Puffer 28.1 aufgezeigt, welcher bei den oben beschriebenen Einrichtungen, bevorzugt zwischen Magnetventilen und Saugstellen 4, zwischengeschaltet werden kann. Bevorzugt sind zwei Puffer 28.1, 28.2 nebeneinander angeordnet und miteinander über die Einlässe 30 mit dazwischenliegenden Ventilen 37.1, 37.2 verbunden. Diese werden über ein T-Stück mit Nahrungsmittel gespeist. Dabei wird dem einen oder dem anderen Puffer 28.1, 28.2 Nahrungsmittel zugeführt. Das Zuführen von Nahrungsmittel kann im Wechsel erfolgen. So gelangt das Nahrungsmittel in einen geschlossenen Behälter 29, dessen Volumen veränderbar ist. Hier sind verschiedenste Ausgestaltungen derartiger Behälter 29 denkbar.

Ist der Behälter 29 gefüllt, so wird die Nahrungsmittelzufuhr unterbrochen und dass Kalb säuft aus diesem Behälter 29, wobei bspw. eine Membran 33 nachgibt, bis der Behälter 29 durch einen Auslass 31 entleert ist. Diese Membran 33 ist mit einem Sensor 35 bzw. Magneten oder ähnlichem Metallstück versehen, welcher ein Signal an einem Schalter 36 auslöst, wenn die Membran 33 nahe des Behälterbodens 32 anliegt. Während der Behälter 29 ausgesoffen wird, kann ein weiterer Behälter 29 gefüllt werden.

Ist der erste Behälter 29 entleert, so kann der Sensor 35 bspw. mittels der Membran 33 ein Signal abgeben, um die Saugstelle 4 ggfs. über den Puffer 28.1 wieder zu bedienen. Wichtig ist allerdings auch, dass die Öffnungszeiten der Ventile 37.1, 37.2 bei abgeschaltetem Schalter 36 eine gewisse Nachlaufzeit geöffnet bleiben können, um den Behälter 29 des Puffers 28.1, 28.2 optimal auszufüllen bzw. zu nutzen. Somit lassen sich die Magnetventile schonen, bei gleichzeitiger Reduktion ihrer Schalthäufigkeit.

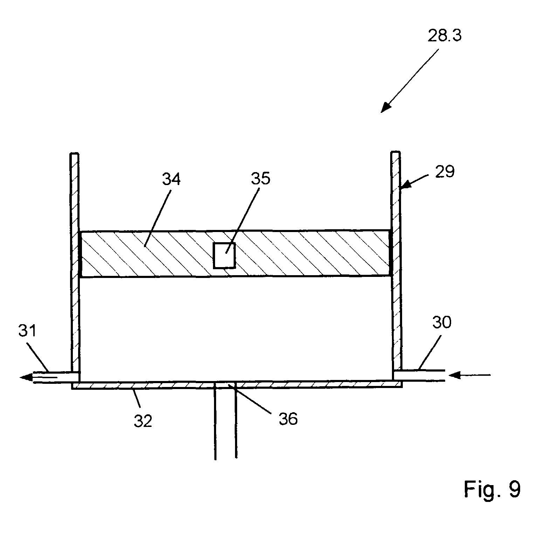

In einem weiteren Ausführungsbeispiel der vorliegenden Erfindung gemäss Figur 9 ist anstelle der Membran 33 ein Kolben 34 in einen Behälter 29 eingesetzt, welcher nach oben verfährt, wenn der Behälter 29 gefüllt wird. Nach dem Befüllen wird die Zuleitung bzw. der Einlass 30 mittels des Ventils 37 unterbrochen und das Kalb kann den Behälter 29 aussaufen. Währenddessen kann ein weiterer Behälter aufgefüllt werden. Der erste Behälter kann von einem Kalb ausgesoffen werden. Der Kolben verfährt beim Saufen langsam nach unten in Richtung des Behälterbodens 32. Dann wird ein entsprechendes Signal über den Sensor 35 und Schalter 36 geschaltet, um den Behälter 29 wieder zu befüllen. In dieser Zeit ist dann die Zuleitung bzw. der Einlass 30 geschlossen und der andere Behälter kann dann befüllt werden.

Hierdurch wird auch ein konstanter Druck im System erhalten und dem Kalb wird eine ganz bestimmte messbare Restmenge an Nahrungsmittel zum Saufen bereit gestellt. Ein weiterer Vorteil ist, dass sich ein derartiger Behälter sehr leicht reinigen lässt, da dieser gegen der Umgebung verschlossen ist. Er braucht nur durchspült werden. Auch die Kolbenausführung des Puffers 28.3 lässt viele Vorteile zu, da dieser in seiner eingefahrenen Position auch sehr leicht zu reinigen ist.

## Patentansprüche

1. Verfahren zur Versorgung von Haustieren mit einem flüssigen Nahrungsmittel, das aus einem Vorratsbehälter, insbesondere einem Mischbehälter (1, 1.1) eines Tränkeautomaten, über eine Saugleitung (2) zu einer Saugstelle (4 - 4.7) gelangt,
dadurch gekennzeichnet,
dass vor der Saugstelle (4 - 4.7) die Menge des entnommenen flüssigen Nahrungsmittels ermittelt wird.

2. Verfahren nach Anspruch 1, dadurch gekennzeichnet, dass in die Saugleitung (2) zumindest ein Ventil (6) eingeschaltet und die Menge des entnommenen flüssigen Nahrungsmittels über die Öffnungszeit des Ventils (6) ermittelt wird.

3. Verfahren nach Anspruch 1, dadurch gekennzeichnet, dass die Menge des entnommenen flüssigen Nahrungsmittels über zumindest eine in die Saugleitung eingeschaltete Pumpe (10 - 10.5) ermittelt wird.

4. Verfahren nach einem der Ansprüche 1 bis 3, dadurch gekennzeichnet, dass Druckschwankungen zur Mengenberechnung des Nahrungsmittels in der Saugleitung ermittelt und gegebenenfalls ausgeglichen werden.

5. Verfahren nach Anspruch 4, dadurch gekennzeichnet, dass Saugtakte im Verhältnis zur Öffnungszeit des Ventils (6) ermittelt und/oder ausgewertet werden.

6. Verfahren nach Anspruch 4 oder 5, dadurch gekennzeichnet, dass eine individuelle Sauggeschwindigkeit jedes Tieres über die Ventilöffnungszeit ermittelt und/oder ausgewertet und über Zu- oder Abschläge bei der Öffnungszeit ausgeglichen wird.

7. Verfahren nach einem der Ansprüche 4 bis 6, dadurch gekennzeichnet, dass die einzelnen Messelemente (21 - 21.7) über bekannte Teilmengen kalibriert werden.

8. Verfahren nach wenigstens einem der Ansprüche 4 bis 7, dadurch gekennzeichnet, dass Druckschwankungen durch einen gleichbleibenden Vordruck auf der Saugleitung (2) ausgeglichen werden.

9. Verfahren nach wenigstens einem der Ansprüche 4 bis 8, dadurch gekennzeichnet, dass Druckschwankungen durch zumindest einen Druckregler in der Saugleitung (2) ausgeglichen werden.

10. Verfahren nach wenigstens einem der Ansprüche 4 bis 7, dadurch gekennzeichnet, dass Druckschwankungen durch zumindest einen Mengenregler in der Saugleitung (2) ausgeglichen werden.

11. Verfahren nach wenigstens einem der Ansprüche 1 bis 10, dadurch gekennzeichnet, dass zur Ermittlung der Menge an Nahrungsmittel ein Saugunterdruck des Systems und/oder ein Druckabfall bei zugeschalteten Ventilen einbezogen wird.

12. Verfahren nach wenigstens einem der Ansprüche 1 bis 11, dadurch gekennzeichnet, dass durch Schliessen von Rücklaufleitungen ein Druck mehrerer Saugstellen konstant gehalten wird.

13. Verfahren nach wenigstens einem der Ansprüche 1 bis 12, dadurch gekennzeichnet, dass durch alternierendes Hin- und Herschalten zwischen Saugstelle und Rückleitung ein Pumpendruck konstant gehalten wird.

14. Einrichtung zur Versorgung von Haustieren mit einem flüssigen Nahrungsmittel, das aus einem Vorratsbehälter, insbesondere einem Mischbehälter (1) eines Tränkeautomaten, über eine Saugleitung (2) zu einer Saugstelle (4 - 4.7) gelangt, dadurch gekennzeichnet, dass ein Mengenmesselement (21.1 - 21.7) zum Ermitteln des entnommenen flüssigen Nahrungsmittels vorgesehen ist.

15. Einrichtung nach Anspruch 14, dadurch gekennzeichnet, dass der Saugstelle ein Drucksensor (7 - 7.5) vorgeschaltet ist.

16. Einrichtung nach Anspruch 14 oder 15, dadurch gekennzeichnet, dass dem Mischbehälter (1) ein Ventil (6), bevorzugt eine Magnetventil nachgeschaltet ist.

17. Einrichtung nach einem der Ansprüche 14 bis 16, dadurch gekennzeichnet, dass in die Saugleitung (2) eine Förderpumpe (10 - 10.5) für das flüssige Nahrungsmittel eingeschaltet ist.

18. Einrichtung nach einem der Ansprüche 14 bis 17, dadurch gekennzeichnet, dass das flüssige Nahrungsmittel in der Saugleitung (2) zur Saugstelle (4) unter einem statischen Druck steht, wobei an den Mischbehälter (1) und/oder an einen höherliegenden, zwischengeschalteten Vorratsbehälter (9) eine Mehrzahl von Nahrunsleitungen zu einer entsprechenden Mehrzahl von Saugstellen (4) angeschlossen sind.

19. Einrichtung nach Anspruch 18, dadurch gekennzeichnet, dass der Mischbehälter (1) und/oder Vorratsbehälter (9) höher als die Saugstelle (4) angeordnet ist.

20. Einrichtung nach Anspruch 18 oder 19, dadurch gekennzeichnet, dass zwischen Mischbehälter (1) und Vorratsbehälter (9) eine Förderpumpe (10) eingeschaltet ist, welche auch zur Ermittlung der an den Vorratsbehälter (9) abgegebenen Menge an Nahrungsmittel dient.

21. Einrichtung nach einem der Ansprüche 18 bis 20, dadurch gekennzeichnet, dass der Saugstelle (4) ein Ventil (6) vorgeschaltet ist.

22. Einrichtung nach wenigstens einem der Ansprüche 17 bis 21, dadurch gekennzeichnet, dass die Förderpumpe (10.5) mit einem Schalter (13) in Verbindung steht, welcher der Saugstelle (4.5) zugeordnet ist.

23. Einrichtung nach wenigstens einem der Ansprüche 17 bis 22, dadurch gekennzeichnet, dass die Förderpumpe (10.5) bei Stillstand auf Durchfluss geschaltet und eine Verbindung der Saugleitungen (2.1, 12) zwischen Saugstelle (4.5) und Mischbehälter (1) zum etwa widerstandslosen Ansaugen geöffnet ist.

24. Einrichtung zur Versorgung von Haustieren mit einem flüssigen Nahrungsmittel, das aus einem Vorratsbehälter, insbesondere einem Mischbehälter (1.2) eines Tränkeautomaten, über eine Saugleitung (2) zu einer Saugstelle (4) gelangt, dadurch gekennzeichnet, dass zwischen einer Pumpe (10.6) und der Saugstelle (4) ein Verteiler (23) angeordnet ist.

25. Einrichtung nach Anspruch 24, dadurch gekennzeichnet, dass an den Verteiler (23) eine Mehrzahl von Saugleitungen (2.3 - 2.6) angeschlossen sind, wobei an je einer Verzweigung (24), jeweils zwei Magnetventile (26.1, 26.2) und/oder ein Umschaltventil (25) eine Verbindung zu je zwei Leitungen herstellen.

26. Einrichtung nach Anspruch 25, dadurch gekennzeichnet, dass die eine Leitung an eine, mit dem Mischbehälter (1.2) verbundene Rückeitung (27) angeschlossen ist und eine weitere Leitung zur Saugstelle (4) führt.

27. Puffer zum Zwischenspeichern von Nahrunsmittel und Einsetzen in eine Einrichtung zur Versorgung von Haustieren mit einem flüssigen Nahrungsmittel, mit einem Gehäuse (29) zumindest einem Einlass (30) und einem Auslass (31), dadurch gekennzeichnet, dass ein inneres Volumen des Behälters (29) veränderbar ist.

28. Puffer nach Anspruch 27, dadurch gekennzeichnet, dass dem Behälter (29) ein volumenveränderbares Element (33, 34) zugeordnet ist.

29. Puffer nach Anspruch 28, dadurch gekennzeichnet, dass das volumenveränderbare Element (33, 34) als elastische Membran oder Kolben ausgebildet ist.

30. Puffer nach Anspruch 28 oder 29, dadurch gekennzeichnet, dass dem volumenveränderbaren Element (33, 34) ein Sensor (35) und einem Behälterboden (32) ein Schalter (36) zugeordnet ist.

31. Puffer nach einem der Ansprüche 27 bis 30, dadurch gekennzeichnet, dass zwei benachbarte Puffer (28.1, 28.2) über deren Einlässe (30) und dazwischengeschaltetem Umschaltventil (37) miteinander verbunden sind, wobei die beiden Puffer (28.1, 28.2) jeweils alternierend geschaltet sind.
